## Europäisches Patentamt
## European Patent Office
## Office européen des brevets

(19)

(11) Numéro de publication: **0 004 234**
**A2**

(12)

# DEMANDE DE BREVET EUROPEEN

(21) Numéro de dépôt: **79400137.0**

(22) Date de dépôt: **05.03.79**

(51) Int. Cl.²: **F 21 S 3/02**
**F 21 V 7/22, B 29 G 1/00**

(30) Priorité: 06.03.78 FR 7806298

(43) Date de publication de la demande:
19.09.79 Bulletin 79/19

(84) Etats contractants désignés:
BE CH DE GB IT LU NL SE

(71) Demandeur: STRATINOR
1 et 3 rue du Maréchal Leclerc
F-59290 Wasquehal(FR)

(72) Inventeur: Bley, René
87 cours Gambetta
F-69003 Lyon(FR)

(72) Inventeur: Labonne, Michel
Lotissement des Basses Vignes
F-87170 Isle(FR)

(74) Mandataire: Akerman, Casimir et al,
Cabinet Casanova et Akerman 23 boulevard de
Strasbourg
F-75010 Paris(FR)

(54) Luminaire et procédé de fabrication d'une surface réflectrice utilisée dans un tel luminaire.

(57) Luminaire, notamment pour tubes fluorescents, incluant une surface réflectrice et procédé de fabrication de ladite surface.

Selon l'invention, le réflecteur est constitué par le fond dont la surface interne a la forme d'une parabole, ce fond étant obtenu par moulage d'un polyester blanc brillant revêtu ou non d'un dépôt d'aluminium, le polissage du moule donnant à la surface interne du fond un aspect parfait.

Application : Luminaires étanches à haut rendement lumineux.

Fig. 4

EP 0 004 234 A2

Croydon Printing Company Ltd.

1

Luminaire et procédé de fabrication d'une surface
réflectrice utilisée dans un tel luminaire.

-------------------

La présente invention a pour objet un luminaire et le procédé de fabrication d'une surface réflectrice utilisée dans un tel luminaire, destinés en particulier mais non exclusivement à recevoir des tubes fluorescents.

On sait que, fondamentalement, un luminaire pour tubes fluorescents, se compose d'un fond en tôle ou en matière plastique sur lequel est montée la réglette de support des composants (broches, ballast, starter) et d'une vasque translucide avec interposition dans le cas des luminaires dits étanches, d'un joint entre le fond et la vasque.

Les luminaires ainsi constitués présentent des rendements lumineux médiocres étant donné qu'une partie non négligeable de la lumière est absorbée par le fond. On a déjà remédié à cet inconvénient en introduisant entre la vasque et le fond le niveau de la surface de la réglette, un réflecteur plan constitué, par exemple, en tôle d'acier laquée avec de la peinture blanche. La présence de ce réflecteur, si elle améliore effectivement le rendement lumineux, augmente le poids et le coût des luminaires.

La présente invention a pour objet de remédier à cet inconvénient et est relative à un luminaire constitué par un fond sur lequel est fixée une vasque translucide et caractérisé en ce que la surface interne dudit fond est une surface réflectrice dont la section est de forme concave sensiblement parabolique.

Ainsi, le fond lui-même de l'appareil constitue le réflecteur et sa forme, en partie parabolique, améliore considérablement la courbe de répartition de la lumière.

D'autres caractéristiques et avantages de l'invention apparaîtront au cours de la description qui va suivre d'un mode de réalisation donné à titre d'exemple non limitatif en regard des figures qui représentent:

- la figure 1 une vue partielle en coupe du moule au moment du chargement de celui-ci ;
- la figure 2 une vue en coupe du moule fermé;
- la figure 3 une coupe à échelle agrandie d'une partie du moule présenté sur la figure 2 ;
- la figure 4, une vue en coupe d'un luminaire mono ;
- la figure 5, une vue en coupe d'un luminaire duo ;
- les figures 6 et 7 des vues en perspective des luminaires représentés sur les figures 4 et 5.

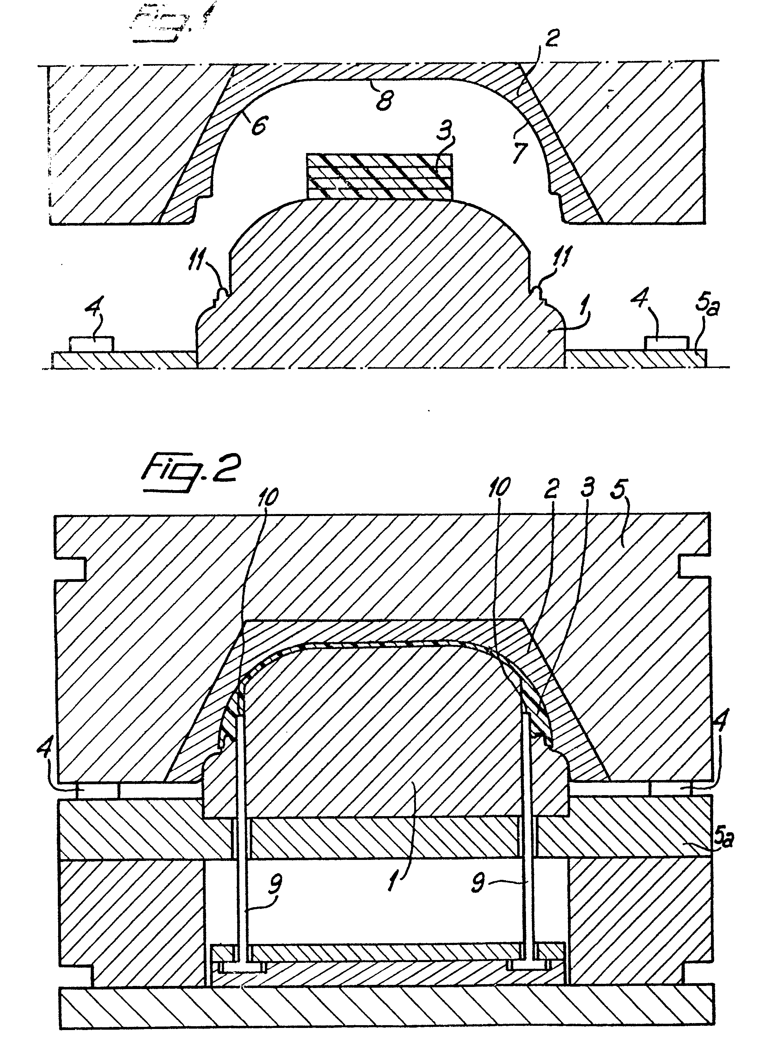

L'invention repose sur la qualité de la surface interne du fond, surface obtenue par moulage d'une matière plastique. La figure 1 est un schéma de principe du chargement du moule. Sur cette figure, on a déposé entre le poinçon 1 et la matrice 2, une quantité convenable de matière plastique 3. Cette matière plastique est avantageusement composée d'une résine thermodurcissable renforcée de brins de fibres de verre et travaillée en forme de feuilles facilement maniables et prêtes à l'insertion dans le moule. La polymérisation de la résine est obtenue par une modification combinée des paramètres, chaleur, pression et temps. Afin d'obtenir la qualité de surface désirée, le poinçon 1 et la matrice 2 sont réalisés en acier rectifié. Le poinçon 1 est rapporté sur une contreplaque 5a munie de cales 4, alors que la matrice 2 est logée dans une frette 5 en acier demi dur.

Avantageusement, la résine synthétique employée est constituée par du polyester blanc pigmenté par du dioxyde de titane ($TiO_2$) rutile, dont le diamètre des particules est compris entre 1,5 et 1,7 micron, alors que les charges sont constituées par du carbonate de calcium non traité en surface et dont le diamètre moyen des particules est inférieur ou égal à 10 microns, 98 % des particules ayant un diamètre inférieur à 20 microns. Le degré de polissage du poinçon est conforme au Rugotest qualité $N_2$ et un bufflage supplémentaire est nécessairement prévu après le polissage. Le poinçon et la matrice peuvent être, par exemple, réalisés en un acier de qualité 35 NCD16. La viscosité de la matière plastique pré-imprégnée doit être comprise nécessairement entre 400.000 et 700.000 poises à 25°C, c'est-à-dire avant le moulage. Au moment du moulage proprement dit, la température du poinçon et de la matrice est portée à 150°C environ.

Selon une autre caractéristique de l'invention, les sections du poinçon 1 et de la matrice 2 sont telles que le produit moulé ait une section interne au moins en partie parabolique, de sorte qu'après montage le tube fluorescent se trouve grosso modo au voisinage du foyer de ladite parabole.

Sur la figure 1, la partie rectiligne 8 de la section de la matrice 2 est entourée de deux parties 6 et 7 formant des arcs paraboliques.

La figure 2 représente le moule coupé au niveau des passages d'éjection, après fermeture et application de la pression. Sous une pression de l'ordre de 100 $kg/cm^2$, le poinçon 1 pénètre dans la matrice 2, la matière plastique 3 fluant alors, sous l'influence conjuguée de la pression et de la chaleur qui, par ailleurs, polymérise la matière, de manière à former l'empreinte 3 dans l'espace défini entre la matrice et le poinçon. La résine polyester est une résine à bas retrait.

Après cette opération de moulage qui ne dure que quelques secondes, le poinçon 1 est extrait de la matrice et la pièce moulée 3 reste sur le poinçon et peut être dégagée de celui-ci au moyen d'éjecteurs 9 prenant appui sur des surépaisseurs 10 formées dans la pièce moulée. De part et d'autre du poinçon 1, sont prévues des saillies 11 destinées à former une gorge 12 dans la pièce moulée, gorge dans laquelle viendra se placer ultérieurement le joint d'étanchéité.

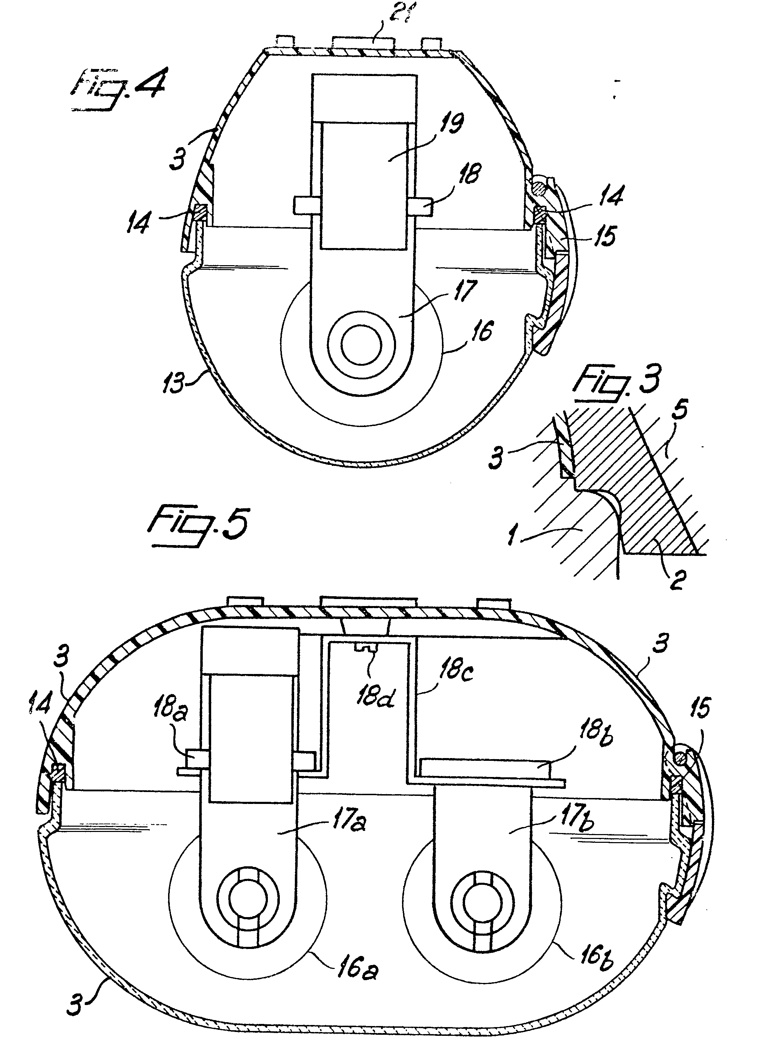

La figure 3 est une vue à échelle agrandie de la région inférieure de la matrice lorsque le poinçon est en position à l'intérieur de celle-ci. Les références des figures précédentes ont été conservées.

Après moulage et ébavurage éventuel, le fond formant réflecteur du luminaire, peut être soumis à une évaporation sous vide d'aluminium ou être employé directement dans le luminaire.

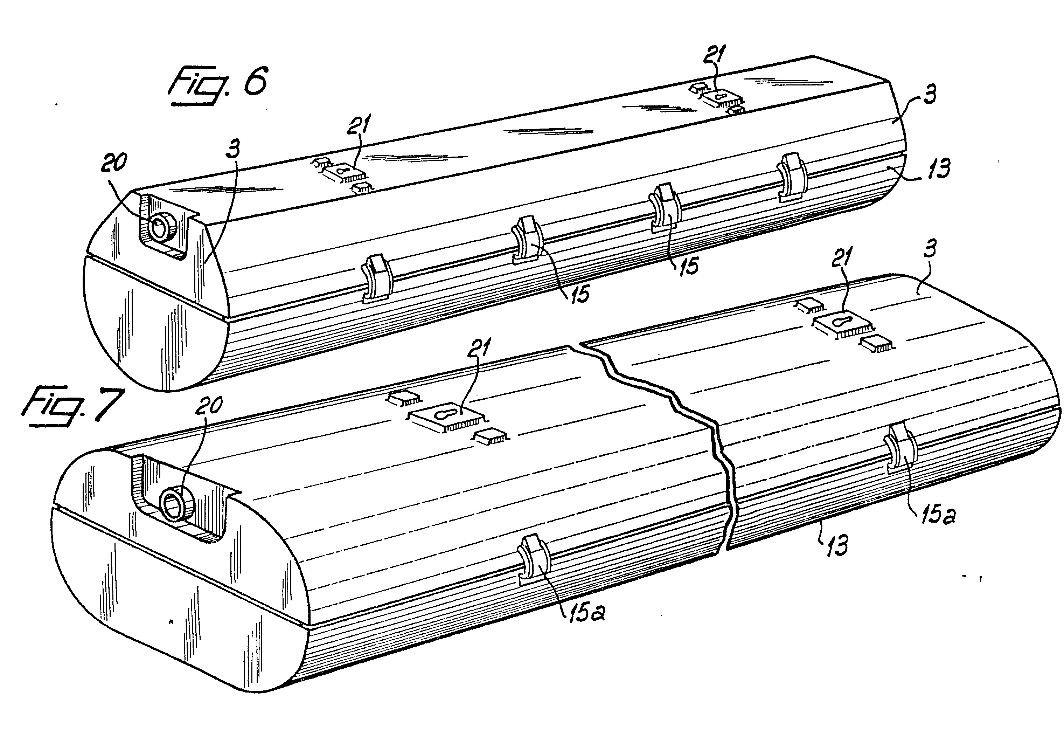

Les figures 4 et 6 représentent respectivement en coupe et en perspective un luminaire destiné à recevoir un seul tube fluorescent. Sur le fond 3 est fixée une vasque 13 en méthacrylate de méthyle clair, d'aspect perlé. L'étanchéité entre ces deux éléments est assurée par un joint 14 placé dans la gorge 12 du fond 3 précédemment mentionné. La fixation de la vasque sur le fond est assurée dans ce cas par quatre clips 15. A l'intérieur du luminaire est monté un tube 16 sur des broches 17 soutenues par une réglette 18. Cette réglette est elle-même montée sur un support, non représenté, fixé à la partie supérieure du fond 3. Un passage 20 permet de relier d'une manière étanche le luminaire au réseau électrique, la fixation du luminaire sur une paroi quelconque étant obtenue par un vissage, la tête de vis pénétrant dans les bossages de fixation 21. Sur la figure 4, la référence 19 symbolise le starter d'allumage du tube fluorescent lorsque ce tube est allumé par starter.

Les références précédentes ont été conservées sur les figures 5 et 7 pour désigner les mêmes éléments. Dans le cas d'un luminaire duo destiné à recevoir, par exemple, deux tubes fluorescents, la vasque 13 est fixée sur le fond 3, comme précédemment, au moyen de six clips 15 imperdables, dont une extrémité pivotante est articulée sur le fond. Les deux tubes 16a et 16b sont portés comme précédemment par deux broches 17a et 17b, solidaires de deux réglettes 18a et 18b supportées par un support 18c lui-même vissé en 18d sur le fond 3. La fixation de ce luminaire au plafond ou sur une paroi verticale, se fait de la même façon que précédemment. Les luminaires ainsi obtenus sont étanches tant aux poussières qu'aux projections d'eau.

Bien que la description qui vient d'être faite mentionne le moulage de polyester imprégné, il va de soi qu'elle s'applique à toute autre matière présentant après moulage une qualité de surface suffisante pour former un réflecteur de bonne qualité optique. On utilise toutefois, de préférence, selon la présente invention un "préimprégné en feuille" obtenu par combinaison préalable d'une résine polyester mélangée avec des résines thermoplastiques afin de limiter le retrait de polymérisation, de charges inorganiques, de pigments d'agent de démoulage et de fibres de verre. Le mélange est ensuite étendu en feuilles puis soumis à maturation pendant plusieurs heures afin de provoquer l'épaississement de la résine, de manière à ce que les feuilles ne collent pas et puissent être aisément manipulées. Il est, d'autre part, évident que l'éclairage fluorescent ne constitue pas le seul domaine d'application des surfaces réflectrices obtenues par le procédé selon l'invention qui peuvent être employées avec des lampes à incandescence.

Il va de soi que des modifications peuvent être apportées au mode de réalisation qui vient d'être décrit, notamment par substitution de moyens techniques équivalents, sans sortir pour cela du cadre de la présente invention.

Revendications de brevet

1.- Luminaire, notamment pour tubes fluorescents, constitué par un fond supportant les composants et sur lequel est fixée une vasque translucide, caractérisé en ce que la surface interne dudit fond est de forme générale concave, sa section transversale étant constituée par au moins un arc de parabole, ladite surface interne constituant une surface réflectrice.

2.- Luminaire selon la revendication 1, caractérisé en ce que le fond précité est constitué par une résine polyester préimprégnée additionnée de fibres de verre.

3.- Luminaire selon l'une des revendications 1 ou 2, caractérisé en ce qu'un joint est interposé entre le fond et la vasque, la vasque pressant sur ledit joint sous l'action de clips.

4.- Procédé de fabrication d'une surface réflectrice pour luminaire selon la revendication 1 par moulage sous pression d'une matière synthétique entre un poinçon et une matrice, caractérisé en ce qu'il consiste:
- à introduire dans un moule, dont au moins le poinçon est en acier rectifié et poli, une quantité suffisante de résine thermodurcissable ;
- à porter le poinçon et la matrice à une température de l'ordre de 150°C ;
- à appliquer sur le poinçon une pression de l'ordre de 100 kg/cm$^2$ ;
- à extraire l'empreinte du moule.

5.- Procédé de fabrication selon la revendication 4, caractérisé en ce que la matière thermodurcissable est obtenue par un mélange préalable de résine polyester avec des matières thermoplastiques, des charges inorganiques et des pigments, l'ensemble ainsi obtenu étant étendu en feuilles, puis soumis à maturation afin d'épaissir la résine.

6.- Procédé de fabrication selon la revendication 5, caractérisé en ce que la matière synthétique thermodurcissable en feuilles présente, avant son introduction dans le moule, une viscosité comprise entre
400.000 et 700.000 poises à la température de 25°C.

7.- Procédé de fabrication selon l'une des
revendications 4 à 6, caractérisé en ce que le pigment
est constitué par du dioxyde de titane rutile dont le
diamètre des particules est compris entre 1,5 et 1,7 micron.

8.- Procédé de fabrication selon l'une des
revendications 4 à 6, caractérisé en ce que les charges
sont constituées par du carbonate de calcium, de granulométrie moyenne égale à 10 microns.

9.- Procédé de fabrication selon l'une des
revendications 4 à 8, caractérisé en ce que la surface réflectrice est revêtue d'une couche d'aluminium par évaporation sous vide.

Fig.1

Fig.2

Fig.4

Fig.3

Fig.5

Fig. 6

Fig. 7

3/3

0004234